# EUROPÄISCHE PATENTSCHRIFT

(11) **EP 3 819 106 B1**
(45) Veröffentlichungstag und Bekanntmachung des Hinweises auf die Patenterteilung: **27.07.2022**
(21) Anmeldenummer: 20195195.1
(22) Anmeldetag: 09.09.2020
(51) Int. Cl.: B29C 70/86, B29C 70/08, B29C 70/54, C23C 4/02, C23C 4/06, C23C 4/073, C23C 4/08, C23C 4/10, C23C 4/11, C23C 4/129, C23C 4/131, C23C 4/134

(54) **VERFAHREN ZUR HERSTELLUNG EINES VERBUNDBAUTEILS, DAS MIT EINEM FASERVER-STÄRKTEM KUNSTSTOFFBAUTEIL, AN DEM MINDESTENS EINE OBERFLÄCHE MIT EINER BESCHICHTUNG AUSGEBILDET IST, GEBILDET IST**
METHOD FOR PRODUCING A COMPOSITE COMPONENT FORMED WITH A FIBRE-REINFORCED PLASTIC COMPONENT ON WHICH AT LEAST ONE SURFACE IS FORMED WITH A COATING
PROCÉDÉ DE FABRICATION D'UN COMPOSANT COMPOSITE FORMÉ D'UN COMPOSANT EN MATIÈRE PLASTIQUE RENFORCÉ PAR DES FIBRES COMPRENANT AU MOINS UNE SURFACE DOTÉE D'UN REVÊTEMENT

(30) Priorität: 12.09.2019 DE 102019213905
(43) Veröffentlichungstag der Anmeldung: 12.05.2021
(73) Patentinhaber: Fraunhofer-Gesellschaft zur Förderung der angewandten Forschung e.V., 80686 München (DE)
(72) Erfinder: Reif, Manuel, 01277 Dresden (DE); Scheitz, Stefan, 01277 Dresden (DE)
(74) Vertreter: Pfenning, Meinig & Partner mbB

(56) Entgegenhaltungen:
- EP-A1- 0 514 640
- WO-A1-2019/126314
- US-A- 4 675 205

## Beschreibung

Die Erfindung betrifft ein Verfahren zur Herstellung eines Verbundbauteils, das mit einem faserverstärktem Kunststoffbauteil (FVK-Bauteil), an dem mindestens eine Oberfläche mit einer Beschichtung ausgebildet ist, gebildet ist.

Die Beschichtung von faserverstärkten Kunststoffen (FVK) mittels thermischem Spritzens ist nur mit einer geeigneten Oberflächenvorbereitung möglich. Vorrausetzung für eine erfolgreiche Beschichtung ist eine ausreichende Rauheit, um die mechanische Verklammerung der schichtbildenden Spritzpartikel zu gewährleisten.

Es sind unterschiedlichste Verfahren bekannt, die angewendet werden können, um die Oberfläche von nichtmetallischen (inkl. FVK-Bauteilen) für das thermische Spritzen vorzubereiten. Die bisher eingesetzten Methoden zur Oberflächenvorbereitung lassen sich in folgende Kategorien gliedern: Chemisch-physikalisch, thermisch und mechanisch. Das bei metallischen Werkstoffen etablierte Verfahren ist das Sandstrahlen, um die Bauteiloberfläche für das thermische Spritzen aufzurauen. Dieses Verfahren wird aktuell auch für nichtmetallische Werkstoffe angewendet, auch wenn Untersuchungen gezeigt haben, dass durch das Sandstrahlen festigkeitsreduzierende Schädigungen in den zu beschichtenden Substraten induziert werden.

Alle bisher eingesetzten Verfahren werden erst nach dem Fertigungsprozess vor dem Beschichtungsvorgang angewendet. Diese arbeiten vorwiegend nach dem Prinzip durch unterschiedliche Mechanismen Material von der Oberfläche abzutragen und diese aufzurauen.

US4675205 A offenbart eine Behandlung einer Oberfläche eines Werkstücks zur Verbesserung der Haftung einer Beschichtung durch Einwirkung eines heißen Gasplasmas.

Aus WO 2018/200053 A1 ist eine technische Lösung bekannt, die auf eine vollständige Entfernung der Matrix aus einem Polymer bei einem FVK-Bauteil gebildet ist, abzielt. Dadurch sollen sich die Spritzzusatzwerkstoffe direkt mit den Fasern verbinden können, so dass eine Schichtanhaftung direkt an Fasern durch Diffusion und Van-der-Waals-Kräften stattfinden kann. Dabei wird angestrebt, dass zwischen der Schicht und dem Fasermaterial eine Zwischenphase aus Silicaten (bei GFK-Grundmaterial) oder Carbiden (bei CFK-Grundmaterial) gebildet wird.

Abreißgewebe sind bereits im Bereich der Teilefertigung von FVK etabliert, um die Oberfläche für weitere Bearbeitungsschritte, wie Verkleben oder Lackieren vorzubereiten. Als Abreißgewebe versteht man ein Gewebe, das bei der Laminatfertigung als letzte Lage aufgebracht wird. Mithilfe dieses Gewebes wird überschüssiges Laminierharz vom Laminat entfernt und die Oberfläche aufgeraut. Dieses Abreißgewebe ist aufgrund seiner Verbreitung bei der Bauteilherstellung in der Luftfahrt und dem Leichtbau ein klassisches Zukaufteil, das von verschiedenen Herstellern in unterschiedlicher Ausführung beschafft werden kann. Dieses Abreißgewebe kann aus Polyamiden (z.B. Nylon) oder Polyestern bestehen. Am verbreitetesten sind jedoch Abreißgewebe aus Ny-Ion. Die Abreißgewebe werden von den Herstellern in unterschiedlichen Ausführungen angeboten. Unterschieden werden diese anhand ihrer Webbindung (v.a. Leinwand oder Körper-Bindung) und ihres Flächengewichts (ca. 64-100 g/cm²).

Die grundsätzliche Funktionsweise sowie die elementaren Eigenschaften sind jedoch bei allen genannten Ausführungsformen gleich. Das Abreißgewebe wird dabei von dem Matrixwerkstoff getränkt und lässt sich mit geringem Kraftaufwand von der Bauteiloberfläche abziehen. Das Muster, das in der Bauteiloberfläche hinterlassen wird, ist direkt vom verwendeten Abreißgewebe abhängig. Durch geeignete Auswahl des Abreißgewebes kann die Oberflächenstruktur sowie der Grad der Rauheit eingestellt werden.

Es ist daher Aufgabe der Erfindung, Möglichkeiten für die Herstellung von Verbundbauteilen, bei denen auf einer Oberfläche eines FVK-Bauteils eine Beschichtung mittels eines thermischen Spritzverfahrens ausgebildet wird, die eine verbesserte Haftung und das Verbundbauteil eine erhöhte Festigkeit aufweist.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei dem Verfahren wird ein mit textilen Fasern gebildetes Gebilde mit einem fließfähigen polymeren Matrixwerkstoff so getränkt, dass die Fasern vom fließfähigen polymeren Matrixwerkstoff vollständig umschlossen werden und im Bereich der Oberfläche, die mit der Beschichtung versehen wird, eine Dicke des fließfähigen polymeren Matrixwerkstoffs oberhalb der Fasern von mindestens 100 µm eingehalten und dort mindestens eine Lage eines Abreißgewebes, eines Gitters oder einer Gaze aufgelegt und vollständig mit dem fließfähigen polymeren Matrixwerkstoff getränkt wird.

Ein fließfähiger polymerer Matrixwerkstoff sollte dabei eine Viskosität aufweisen, mit der er in Zwischenräume von Fasern in das textile Gebilde eindringen kann. Dies kann mit Druckunterstützung erreicht werden. Dabei kann beispielsweise mittels Unterdruck eine Infiltration erreicht werden.

Ein textiles Gebilde kann beispielsweise ein Gewebe, ein Gewirk oder auch ein Gelege von Fasern sein.

Beim Tränken sollte darauf geachtet werden, dass keine Benetzung der oberen Lage stattfindet. Auf die Oberfläche von Gazen und Gitter kann vor dem Tränken mit dem fließfähigen polymeren Matrixwerkstoff ein Trennmittel (z.B. flüssiges Trennwachs) aufgebracht werden, um das Abreißverhalten zu verbessern. Abreißgewebe z.B. aus Nylon werden vom polymeren Matrixwerkstoff nicht benetzt, daher ist der Einsatz eines Trennmittels in diesem Fall nicht zwingend erforderlich. Ein zumindest vollständiges Tränken des Abreißgewebes, eines Gitters oder einer Gaze sollte vermieden werden, um ein Abreißen mit geringer Kraft von der Oberfläche, ohne dass eine Schädigung der darunterliegenden Schichten des polymeren Matrixwerkstoffs auftritt, zu ermöglichen.

Danach wird der polymere Matrixwerkstoff, insbesondere ein polymeres Harz ausgehärtet und dann die mindestens eine Lage eines Abreißgewebes, eines Gitters oder einer Gaze durch Abziehen entfernt. Dadurch wird in diesem Bereich eine Oberfläche mit erhöhter Rauheit so erhalten, dass zwischen der Oberfläche mit erhöhter Rauheit und den Fasern eine -mit dem ausgehärteten polymeren Matrixwerkstoff gebildete Schicht, mit einer Dicke von mindestens 100 µm vorhanden ist. Die Fasern sind dadurch vom ausgehärteten polymeren Matrixwerkstoff vollständig bedeckt.

Im Anschluss daran wird die Beschichtung mittels eines thermischen Spritzverfahrens im Bereich der Oberfläche mit erhöhter Rauheit aufgebracht.

Vorteilhaft sollte eine Dicke der mit dem fließfähigen polymeren Matrixwerkstoff oberhalb der Fasern gebildeten Schicht, zwischen 100 µm bis 500 µm und/oder eine Dicke der mit dem ausgehärteten polymeren Matrixwerkstoff gebildeten Schicht, zwischen 100 µm bis 500 µm eingehalten werden.

Nach dem Aushärten des polymeren Matrixwerkstoffs und vor der Ausbildung der Beschichtung kann eine thermische Behandlung mit einer Temperatur, die größer als die Temperatur mit der der Spritzwerkstoff auf die Oberfläche mit erhöhter Rauheit auftrifft, ist, durchgeführt werden. Diese Temperatur sollte mindestens 5 % größer als die Temperatur mit der der Spritzwerkstoff auf die Oberfläche mit erhöhter Rauheit auftrifft, sein.

Es kann auch eine Lage eines Abreißgewebes, eines Gitters oder einer Gaze mit Ausschnitten eingesetzt werden. Damit können lokal definierte Bereiche mit und ohne aufgeraute Oberfläche an derjeweiligen Oberfläche des FVK-Bauteils ausgebildet werden und dann lediglich Bereiche mit erhöhter Oberflächenrauheit mit einer Beschichtung mittels thermischem Spritzen versehen werden. So können lokale Anpassungen an die gewünschte Funktionalität eines erfindungsgemäß hergestellten Verbundbauteils erreicht werden.

Eine Möglichkeit, um die Oberfläche von FVK-Bauteilen ohne Beeinträchtigung der Substrateigenschaften für das thermische Spritzen aufzurauen ist der Einsatz von Abreißgewebe oder einem ähnlich ausgebildeten Strukturelement, wie ein Netzwerk, eine Gitterstruktur oder eine Gaze, die aus polymeren Werkstoffen aber auch aus Metall bestehen können. Nachfolgend sollen unter dem Begriff Abreißgewebe auch solche Strukturelemente verstanden werden.

Die Verwendung von Gitterstrukturen als Strukturelemente, die ähnlich dem Abreißgewebe nach dem Laminiervorgang von der Oberfläche abgezogen werden können, ist daher möglich. Hierbei kommen z.B. Gittermatten aus Kunststoffen oder Metallen infrage, die Gitterweiten von ca. 1 µm bis 50 µm sowie eine Dicke von ca. 10 µm bis 100 µm aufweisen. Anstelle von Gitterstrukturen können auch Gazen mit denselben Eigenschaften hinsichtlich geometrischer Abmessung sowie Werkstoff, wie die genannten Gitterstrukturen Verwendung finden.

Um eine Schichtanbindung gewährleisten zu können, wird sichergestellt, dass die polymere Matrix des FVK-Bauteils nach der Entfernung des Abreißgewebes noch eine ausreichende Dicke aufweist. Die Dicke der Matrixschicht nach der Entfernung des jeweiligen Abreißgewebes oberhalb der Faserstruktur des jeweiligen FVK-Bauteils soll hierzu mindestens 100 µm aufweisen, damit sichergestellt werden kann, dass während des thermischen Spritzvorganges keine Fasern freigelegt und/oder geschädigt bzw. zerstört werden.

Die maximale Dicke des Matrixwerkstoffs richtet sich nach dem verwendeten Prozess und kann bis zu mehreren Millimetern betragen, jedoch sollte der überschüssige polymere Matrixwerkstoff aus Gewichtsgründen möglichst gering gewählt werden. Die verbliebene Matrixwerkstoffdicke nach der Entfernung des Abreißgewebes oberhalb der Fasern des jeweiligen FVK-Bauteils soll im Bereich 100 µm bis 500 µm liegen. Dies kann bevorzugt dadurch erreicht werden, dass das Abreißgewebe beim Fertigungsvorgang eines FVK-Bauteils vollständig mit dem polymeren Matrixwerkstoff getränkt wird. Dadurch kann gesichert werden, dass nach Entfernung des Abreißgewebes keine Fasern ganz oder teilweise freigelegt wurden. Für eine sichere Schichtanbindung der thermischen Spritzschicht dürfen die Fasern an keiner Stelle freigelegt werden, da diese durch den Spritzprozess in Mitleidenschaft gezogen werden können, was zu einer Verschlechterung insbesondere der mechanischen Substrateigenschaften führt.

Bei den oben genannten, etablierten Verfahren, müssen häufig der Aufwand bzw. die Kosten mit der erreichbaren Oberflächengüte abgewogen werden. Oftmals wird aus Kostengründen eine verringerte Oberflächenqualität hingenommen. Da es sich bei der Oberflächenvorbehandlung mit Abreißgewebe um ein sehr kostengünstiges und ein bereits in der Industrie etabliertes Verfahren bei der Fertigung von FVK-Bauteilen handelt, würde sich ein großes Potential durch die Verwendung von Abreißgewebe ergeben, wenn die Qualität der Schichtanbindung beim thermischen Spritzen mindestens der von ursprünglich verwendeten, etablierten Verfahren, wie dem Sandstrahlen entspricht.

Um die Oberfläche gemäß der Erfindung vorzubereiten werden FVK-Bauteile z.B. im Handlaminat- oder Prepreg-Verfahren hergestellt und als letzte Gewebelage ein Abreißgewebe, Gitter oder eine Gaze aufgebracht. Dieses bzw. diese wird bzw. werden nach dem Aushärten des Laminierharzes als polymerer Matrixwerkstoff, z.B. direkt vor dem Beschichtungsvorgang, von der zu beschichtenden Oberfläche abgezogen und diese Oberfläche kann dann mithilfe von Ethanol gereinigt werden.

Danach erfolgt die Beschichtung durch thermisches Spritzen. Die so behandelten FVK-Bauteile können nach der Aushärtung des polymeren Matrixwerkstoffs thermisch durch Tempern behandelt werden. Die thermische Behandlung sollte bei einer Temperatur durchgeführt werden, die der maximalen Oberflächentemperatur beim Spritzprozess entspricht (z.B. beim APS: ~70°C), möglichst aber mindestens 5 % größer als diese maximale Temperatur sein. Zusätzlich sollte berücksichtigt werden, dass diese Temperatur beim eingesetzten Spritzprozess nicht überschritten wird. Dazu sollte der jeweilige Beschichtungsprozess gezielt ausgewählt werden. Außerdem sollten die jeweiligen Prozessparameter dementsprechend auf das so vorbereitete FVK-Bauteil angepasst werden, um eine Schädigung des Bauteils zu verhindern. Mögliche prozessseitige Anpassungsmöglichkeiten umfassen die Bauteilkühlung, den Spritzabstand, die eingesetzten Prozessgasmengen und (-drücke), den eingesetzten Spritzwerkstoff mit dem die Beschichtung ausgebildet wird (einschließlich Förderrate und Methode der Zuführung) sowie ggf. Parameter der Stromzuführung (elektrischen Spannung und Stromstärke). Mithilfe dieser Parameter kann der Spritzprozess derart eingestellt werden, dass keine Schädigung des FVK-Bauteils und insbesondere der Fasern auftritt. Als Hauptmechanismen der Schädigungsprozesse kann einerseits die thermische Überlastung und andererseits die Schädigung aufgrund der hohen Geschwindigkeit der Spritzpartikel genannt werden. Die thermische Schädigung lässt sich feststellen, indem die Bauteiloberflächentemperatur während des Spritzprozesses kontinuierlich überwacht wird, außerdem lassen sich thermische Schäden nach dem Spritzprozess durch eine Verfärbung der Fasern bzw. des Matrixwerkstoffs feststellen.

Wenn die Partikelgeschwindigkeit so hoch gewählt ist, dass dadurch eine Bauteilschädigung auftrifft, ist dies dadurch feststellbar, dass ein Abtrag an der Oberfläche (ähnlich dem Sandstrahlen) auftritt. Einen wichtigen Aspekt bei der Bauteilfertigung kann auch eine Bauteilkühlung darstellen. Diese kann entweder direkt an der beim thermischen Spritzen eingesetzten Spritzpistole angebracht oder als externe Kühlung direkt am FVK-Bauteil (von der Vorder- oder der Rückseite) ausgeführt sein. Die notwendige Kühlleistung sollte auf das jeweilige FVK-Bauteil abgestimmt sein und sollte während des Prozesses überwacht werden. Sie muss ausreichend dimensioniert sein, sodass keine temperaturbedingte Schädigung des FVK-Bauteils beim thermischen Spritzen auftreten kann.

Erfindungsgemäß erfolgt keine vollständige Entfernung des polymeren Matrixwerkstoffs und dabei keine Freilegung von Fasern. Die zu beschichtende

Oberfläche des polymeren Matrixwerkstoffs wird lediglich aufgeraut. Die Schichtanhaftung erfolgt vorwiegend durch mechanische Verklammerung. Weitere Bindungsmechanismen wie Van-der-Waals-Kräfte und Diffusionsvorgänge sind hier vernachlässigbar.

Neben dem Prozess des atmosphärischen Plasmaspritzens (APS) mit Aluminiumpulver können bei der Erfindung auch andere thermische Spritzprozesse und Spritzzusatzwerkstoffe (z.B. Polymere wie Thermoplasten, niedrigschmelzende Metalle, wie z.B. Ni-Legierungen, (insbesondere NiAl, NiCr), Aluminium, Kupfer oder Bronze, Messing sowie Keramiken mit vorherigem Bondcoat), die sich grundsätzlich für die FVK-Beschichtung eigenen, einsetzen. Geeignete thermische Spritzverfahren sind z.B. atmosphärisches Plasmaspritzen, Lichtbogendrahtspritzen, Hochgeschwindigkeitsflammspritzen oder Flammspritzen. Der Spritzwerkstoff, mit dem die Beschichtung ausgebildet wird, kann Verfahrensabhängig als Pulver, Draht, Schnur, Stab, Suspension oder Lösung dem Prozess zugeführt werden

Bei dem erfindungsgemäßen Verfahren kann bei der Herstellung eines FVK-Bauteiles so vorgegangen werden, dass im Handlaminat- oder Prepreg-Verfahren als letzte Lage Abreißgewebe, Gitterstruktur oder Gaze aufgelegt wird. Diese Lage wird mit dem polymeren Matrixwerkstoff vollständig getränkt oder vollständig benetzt. Nach dem Aushärten des polymeren Matrixwerkstoffs wird die Lage von der Oberfläche abgezogen und hinterlässt eine reproduzierbare, gleichmäßig verteilte Oberflächenstruktur für die anschließende Beschichtung durch thermisches Spritzen.

Ein Abreißgewebe sollte mit einer Einzelfilamentbreite von 10 µm bis 50 µm und einer Faserbündelbreite von 100 µm bis 1000 µm, eine Gitterstruktur oder Gaze sollte mit einer Gitterweite von 1 µm bis 50 µm und einer Dicke von 10 µm bis 100 µm eingesetzt werden.

Die Dicke der Restmatrixwerkstoffschicht oberhalb der Fasern des jeweiligen FVK-Bauteils soll vor dem Auflegen der letzten Lage mindestens 100 µm betragen (Abstand Oberfläche zu Fasern), damit keine Freilegung der Fasern beim Abreißen erfolgt. Die Dicke der Restmatrixwerkstoffschicht wird dabei von der Menge des bei der Herstellung des FVK-Bauteils eingesetzten Matrixwerkstoffs beeinflusst. Vorteilhaft sollte die Restmatrixwerkstoffschichtdicke nach dem Abreißen des Abreißgewebes, der Gitterstruktur oder der Gaze im Bereich von 100 µm bis 500 µm liegen.

Nach dem Abreißen kann die Beschichtung durch thermisches Spritzen erfolgen.

Die Beschichtungsparameter sollten so gewählt werden, dass die Oberflächentemperatur unter der thermischen Zersetzungstemperatur des polymeren Matrixwerkstoffs oder im Falle einer nach der thermischen Beschichtung geplanten Temperns unterhalb dieser Tempertemperatur liegt. Dazu kann eine Substratkühlung mit Hilfe von Düsen mit Druckluft- oder CO₂ beim Beschichten eingesetzt werden. Druckluft oder CO₂ können dazu auf eine Oberfläche des FVK-Bauteils gerichtet werden, die unmittelbar neben einem Bereich angeordnet ist, in dem das thermische Spritzen zu diesem Zeitpunkt durchgeführt wird. Dabei kann Druckluft oder CO₂ auch auf die Oberfläche des FVK-Bauteils gerichtet werden, die der Oberfläche gegenüberliegt, die momentan thermisch beschichtet wird.

Darüber hinaus kann eine Schädigung der Substratoberfläche bei der Ausbildung der Beschichtung durch Vergrößerung des Spritzabstands bzw. Verringerung der thermischen und kinetischen Energie im Prozess (Temperatur und Geschwindigkeit beim Auftreffen der Partikel) minimiert werden. Bei der Vergrößerung des Spritzabstandes erhöht sich der Abstand einer Austrittsdüse eines Spritzwerkzeuges bzw. einer Spritzpistole zur Oberfläche mit erhöhter Rauheit.

In Abhängigkeit des aufzubringenden Spritzwerkstoffs und des eingesetzten Spritzverfahrens können Pulver mit Partikelgrößen zwischen 5 µm und 100 µm eingesetzt werden. Zum Bespiel kann metallisches Aluminiumpulver mit einer Partikelgrößenverteilung von -75 +45 µm oder keramisches Aluminiumoxid mit einer Partikelgrößenverteilung von -40+10 µm beim atmosphärischen Plasmaspritzen (beide Verteilungen mit d₉₀-d₁₀ angegeben) eingesetzt werden.

Bei einer Anpassung der Beschichtungsparameter zur Reduzierung der Oberflächentemperatur am FVK-Bauteil anhand vom atmosphärischen Plasmaspritzen mit Al-Pulver auf CFK kann eine erhöhte Anzahl an Kühldüsen, ein Kühlen mit CO₂ statt mit Druckluft, eine Erhöhung des Spritzabstandes zur zu beschichtenden Oberfläche um bis zu 50 mm zum Standardabstand, der üblicherweise beim atmosphärischen Spritzen eingehalten wird, eine Verringerung des Wasserstoffanteils im Plasmagas auf bis zu 30 % zum Standard und eine Reduzierung der elektrischen Stromstärke auf bis zu 75 % im Vergleich zu den üblichen Spritzparametern unter Berücksichtigung des jeweiligen Spritzwerkstoffs.

Bei Einsatz der Erfindung ist kein aufwändiger zusätzlicher Bearbeitungsschritt notwendig. Sowohl das zusätzliche Auflegen der Lage Abreißgewebe als auch dessen Entfernung vor dem Spritzprozess stellen keinen signifikanten Zeitverlust bei der Bauteilfertigung dar. Zudem zeigten die durchgeführten Versuche, dass die Anhaftung bei der Verwendung von Abreißgewebe, Gitter oder Gaze im Vergleich zu den etablierten Verfahren verbessert wird.

Ein weiterer Vorteil ergibt sich daraus, dass das Abreißgewebe, Gitter oder Gaze sehr flexibel eingesetzt werden kann. Durch Zuschnitt des Abreißgewebes, Gitters oder Gaze können definierte Bereiche mit und ohne aufgeraute Oberfläche ausgebildet werden und dadurch der eigentliche Beschichtungsbereich an der Oberfläche des jeweiligen FVK-Bauteils definiert eingegrenzt werden. Somit lassen sich komplexe Konturen oder Muster als Beschichtung auf einem entsprechend vorbereiteten FVK-Bauteil als Schicht abbilden. Es ist eine lokal definierte selektierte Ausbildung einer thermischen Spritzschicht an einer Bauteiloberfläche möglich, die der gewünschten Funktionalität eines fertig hergestellten Verbundbauteils entspricht.

Mit der Erfindung ergeben sich Verwendungsmöglichkeiten für alle Anwendungsgebiete des thermischen Spritzens auf FVK-Bauteilen: Heizschichten (z.B. für De-Icing-Anwendungen oder als Kabinenheizung von Flugzeugen und PKW), Isolationsschichten oder Verschleißschutzschichten, Deckschichten. Grundsätzlich können sich in Zukunft eine Vielzahl weiterer Anwendungsmöglichkeiten ergeben, wenn es durch fortschreitende Forschung ermöglicht wird, metallische Bauteile auch bei erschwerten Umgebungsbedingungen durch faserverstärkte Kunststoffe zu ersetzen. Es ergibt sich hierdurch Einsparpotential in allen Wirtschaftsbereichen, vor allem jedoch in Bereichen, bei denen Leichtbau und Gewichtsersparnisse einen großen Stellenwert haben. Als Beispiel hierfür kann die Luft- und Raumfahrt genannt werden, aber auch im Bereich des Automobilbaus oder der Entwicklung von Windkraftanlagen lässt sich ein hohes Einsparpotential ableiten.

Nachfolgend soll beispielhaft ein Aufbau, wie er beim thermischen Spritzen eingesetzt werden kann, erläutert werden.

Dabei zeigt:

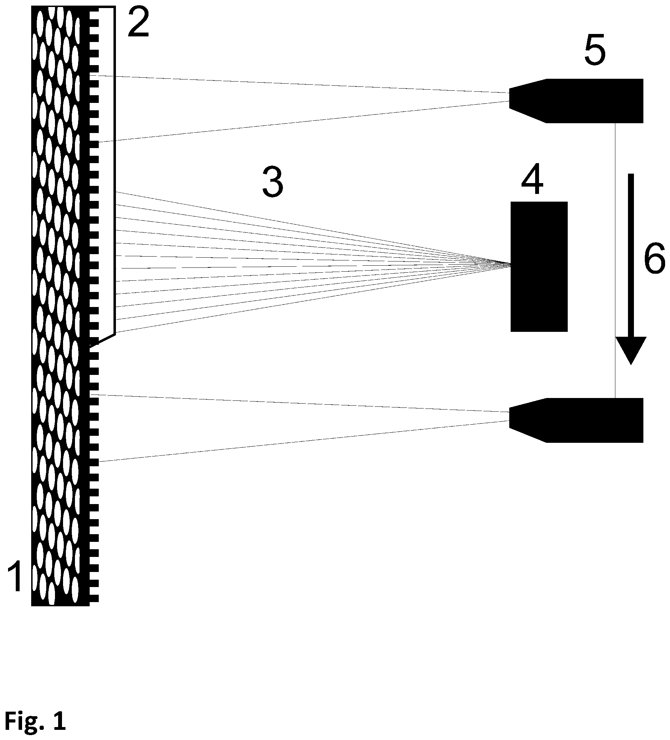

Figur 1 in schematischer Form eine mögliche Anordnung, die man bei der Ausbildung einer Beschichtung mittels thermischem Spritzen einsetzen kann.

Dabei wurde wie im allgemeinen Teil der Beschreibung erläutert, ein Bereich einer Oberfläche eines FVK-Bauteils 1 durch Abreißen so behandelt, dass dort eine erhöhte Oberflächenrauheit erreicht worden ist.

Aus der Austrittsdüse einer Spritzpistole 4 wird durch thermisches Spritzen ein Partikelstrahl 3 in Richtung auf die Oberfläche mit erhöhter Rauheit beschleunigt, so dass diese Oberfläche mit dem Partikelwerkstoff beschichtet wird. Dabei wird die Spritzpistole 4 in Vorschubbewegungsrichtung 6 mit konstanter Geschwindigkeit bewegt. Dadurch bildet sich die Beschichtung 2 aus.

Das FVK-Bauteil 1 wird dabei durch Anströmung von CO₂ oder Druckluft aus den Kühldüsen 5, die an der Spritzpistole 4 angeordnet sind, gekühlt, so dass das Verbundbauteil durch die erhöhten Temperaturen beim thermischen Spritzen nicht ge- oder gar beschädigt wird.

## Patentansprüche

1. Verfahren zur Herstellung eines Verbundbauteils, das aus einem faserverstärktem Kunststoffbauteil, an dem mindestens eine Oberfläche mit einer Beschichtung ausgebildet ist, aufgebaut ist, bei dem ein mit textilen Fasern gebildetes Gebilde mit einem fließfähigen polymeren Matrixwerkstoff so getränkt wird, dass die Fasern vom fließfähigen polymeren Matrixwerkstoff vollständig umschlossen werden und im Bereich der Oberfläche, die mit der Beschichtung (2) versehen wird, eine Dicke des fließfähigen polymeren Matrixwerkstoffs oberhalb der Fasern von mindestens 100 µm eingehalten und dort mindestens eine Lage eines Abreißgewebes, eines Gitters oder einer Gaze aufgelegt und vollständig mit dem fließfähigen polymeren Matrixwerkstoff getränkt oder benetzt wird, nachfolgend
der polymere Matrixwerkstoff ausgehärtet und dann die mindestens eine Lage des Abreißgewebes, des Gitters oder der Gaze durch Abziehen entfernt wird und dadurch in diesem Bereich eine Oberfläche mit erhöhter Rauheit so erhalten wird, dass zwischen der Oberfläche mit erhöhter Rauheit und den Fasern eine Schicht, die mit dem ausgehärteten polymeren Matrixwerkstoff gebildet ist, mit einer Dicke von mindestens 100 µm vorhanden ist und
im Anschluss daran die Beschichtung (2) mittels eines thermischen Spritzverfahrens im Bereich der Oberfläche mit erhöhter Rauheit aufgebracht wird.

2. Verfahren nach Anspruch 1, **dadurch gekennzeichnet, dass** eine Dicke ,der mit dem fließfähigen polymeren Matrixwerkstoff gebildeten Schicht, oberhalb der Fasern zwischen 100 µm bis 500 µm und/oder eine Dicke, der mit ausgehärteten polymeren Matrixwerkstoff gebildeten Schicht, zwischen 100 µm und 500 µm oberhalb der Fasern eingehalten wird/werden.

3. Verfahren nach einem der vorhergehenden Ansprüche, **dadurch gekennzeichnet, dass** ein Abreißgewebe mit einer Einzelfilamentbreite von 10 µm bis 50 µm und einer Faserbündelbreite von 100 µm bis 1000 µm, eine Gitterstruktur oder Gaze mit einer Gitterweite von 1 µm bis 50 µm und einer Dicke von 10 µm bis 100 µm eingesetzt wird.

4. Verfahren nach einem der vorhergehenden Ansprüche, **dadurch gekennzeichnet, dass** ein Trennmittel auf die Oberfläche eines Gitters oder einer Gaze vor dem Tränken mit dem fließfähigen polymeren Matrixwerkstoff aufgebracht wird.

5. Verfahren nach einem der vorhergehenden Ansprüche, **dadurch gekennzeichnet, dass** nach dem Aushärten des polymeren Matrixwerkstoffs und vor der Ausbildung der Beschichtung (2) eine thermische Behandlung mit einer Temperatur, die größer als die Temperatur mit der der Spritzwerkstoff auf die Oberfläche mit erhöhter Rauheit auftrifft, ist, durchgeführt wird, wobei diese Temperatur mindestens 5 % größer als die Temperatur mit der der Spritzwerkstoff auf die Oberfläche mit erhöhter Rauheit auftrifft, ist.

6. Verfahren nach einem der vorhergehenden Ansprüche, **dadurch gekennzeichnet, dass** als thermisches Spritzverfahren atmosphärisches Plasmaspritzen, Lichtbogendrahtspritzen, Hochgeschwindigkeitsflammspritzen oder Flammspritzen eingesetzt wird und der Spritzwerkstoff, der mit dem thermischen Spritzverfahren aufgebracht wird, verfahrensabhängig als Pulver, Draht, Schnur, Stab, Lösung oder Suspension dem Prozess zugeführt wird.

7. Verfahren nach einem der vorhergehenden Ansprüche, **dadurch gekennzeichnet, dass** eine Lage eines Abreißgewebes, eines Gitters oder einer Gaze mit Ausschnitten eingesetzt wird, so dass lokal definierte Bereiche mit und ohne aufgeraute Oberfläche ausgebildet werden und lediglich Bereiche mit erhöhter Oberflächenrauheit mit einer Beschichtung (2) mittels thermischem Spritzen versehen werden.

8. Verfahren nach einem der vorhergehenden Ansprüche, **dadurch gekennzeichnet, dass** während des thermischen Spritzens eine Kühlung am faserverstärkten Kunststoffbauteil durchgeführt und dazu eine erhöhte Anzahl an Kühldüsen (5) an einer Spritzeinrichtung (4), ein Kühlen mit CO₂ statt mit Druckluft, eine Erhöhung des Spritzabstandes zur zu beschichtenden Oberfläche um bis zu 50 mm zum Standardabstand, der üblicherweise beim atmosphärischen Spritzen eingehalten wird, eine Verringerung des Wasserstoffanteils im Plasmagas auf bis zu 30 % in Bezug zum üblichen Standardwasserstoffanteil und/oder eine Reduzierung der elektrischen Stromstärke auf bis zu 75 % zur üblicherweise eingesetzten elektrischen Stromstärke für den jeweiligen Spritzwerkstoff durchgeführt wird.

## Claims

1. Method for producing a composite component constructed from a fibre-reinforced plastics component on which at least one surface with a coating is formed, wherein
a structure formed with textile fibres is impregnated with a flowable polymeric matrix material such that the fibres are completely surrounded by the flowable polymeric matrix material and in the region of the surface that is provided with the coating (2), a thickness of the flowable polymeric matrix material above the fibres of at least 100 µm is maintained and there at least one ply of a pull-off fabric, a mesh or a gauze is laid on and wetted or impregnated completely with the flowable polymeric matrix material, afterwards the polymeric matrix material is cured and then the at least one ply of the pull-off fabric, the mesh or the gauze is removed by peeling and consequently in this region a surface of increased roughness is obtained such that between the surface of increased roughness and the fibres there is a layer formed with the cured polymeric matrix material, having a thickness of at least 100 µm and
subsequently the coating (2) is applied in the region of the surface of increased roughness by means of a thermal spraying process.

2. Method according to Claim 1, **characterized in that** a thickness of the layer formed with the flowable polymeric matrix material above the fibres of between 100 µm to 500 µm and/or a thickness of the layer formed with cured polymeric matrix material of between 100 µm and 500 µm above the fibres are/is maintained.

3. Method according to either of the preceding claims, **characterized in that** a pull-off fabric having a single-filament width of 10 µm to 50 µm and a fibre-bundle width of 100 µm to 1000 µm, a mesh structure or gauze having a mesh size of 1 µm to 50 µm and a thickness of 10 µm to 100 µm is used.

4. Method according to any of the preceding claims, **characterized in that** a release agent is applied to the surface of a mesh or a gauze before the impregnating with the flowable polymeric matrix material.

5. Method according to any of the preceding claims, **characterized in that** after the curing of the polymeric matrix material and before the formation of the coating (2), a thermal treatment is carried out with a temperature which is greater than the temperature at which the spraying material impinges on the surface of increased roughness, this temperature being at least 5% greater than the temperature at which the spraying material impinges on the surface of increased roughness.

6. Method according to any of the preceding claims, **characterized in that** the thermal spraying process used is atmospheric plasma spraying, arc wire spraying, high-speed flame spraying or flame spraying and the spraying material applied by the thermal spraying process is supplied to the operation, process-dependently as powder, wire, string, rod, solution or suspension.

7. Method according to any of the preceding claims, **characterized in that** a ply of a pull-off fabric, a mesh or a gauze with cut-outs is used, and so locally defined regions with and without surface roughening are formed, and only regions of increased surface roughness are provided with a coating (2) by means of thermal spraying.

8. Method according to any of the preceding claims, **characterized in that** cooling is carried out during the thermal spraying on the fibre-reinforced plastics component by means of an increased number of cooling nozzles (5) on a spraying facility (4), cooling with CO₂ rather than with compressed air, an increase in the spraying distance to the surface to be coated by up to 50 mm relative to the standard distance typically maintained during atmospheric spraying, a reduction in the hydrogen fraction in the plasma gas of up to 30% in relation to the typical standard hydrogen fraction and/or a reduction in the electrical current strength of up to 75% relative to the electrical current strength typically used for the spraying material in question.

## Revendications

1. Procédé de fabrication d'une pièce composite, qui est composée d'une pièce en plastique renforcé par des fibres, sur laquelle est réalisée au moins une surface avec un revêtement, selon lequel
une structure formée avec des fibres textiles est imprégnée d'un matériau de matrice polymère fluide, de sorte que les fibres sont complètement entourées par le matériau de matrice polymère fluide et dans la zone de la surface, qui est pourvue du revêtement (2), une épaisseur du matériau de matrice polymère fluide au-dessus des fibres d'au moins 100 µm est maintenue et au moins une couche d'un tissu d'arrachage, d'une grille ou d'une gaze y est posée et complètement imprégnée ou mouillée avec le matériau de matrice polymère fluide,
le matériau de matrice polymère est ensuite durci puis la au moins une couche du tissu d'arrachage, de la grille ou de la gaze est retirée par pelage et une surface à rugosité accrue est ainsi obtenue dans cette zone, de sorte qu'une couche, qui est formée avec le matériau de matrice polymère durci, avec une épaisseur d'au moins 100 µm est présente entre la surface à rugosité accrue et les fibres, et
ensuite le revêtement (2) est appliqué au moyen d'un procédé de projection thermique dans la zone de la surface à rugosité accrue.

2. Procédé selon la revendication 1, **caractérisé en ce qu'**une épaisseur de la couche formée avec le matériau de matrice polymère fluide au-dessus des fibres comprise entre 100 µmet 500 µm et/ou une épaisseur de la couche formée avec le matériau de matrice polymère durci comprise entre 100 µm et 500 µm au-dessus des fibres est/sont maintenue(s).

3. Procédé selon l'une quelconque des revendications précédentes, **caractérisé en ce qu'**un tissu d'arrachage avec une largeur de filament individuel de 10 µm à 50 µm et une largeur de faisceau de fibres de 100 µm à 1 000 µm, une structure de grille ou gaze avec une largeur de grille de 1 µm à 50 µm et une épaisseur de 10 µm à 100 µm est utilisé(e).

4. Procédé selon l'une quelconque des revendications précédentes, **caractérisé en ce qu'**un agent démoulant est appliqué sur la surface d'une grille ou d'une gaze avant l'imprégnation avec le matériau de matrice polymère fluide.

5. Procédé selon l'une quelconque des revendications précédentes, **caractérisé en ce que**, après le durcissement du matériau de matrice polymère et avant la réalisation du revêtement (2), un traitement thermique est effectué à une température qui est supérieure à la température à laquelle le matériau de projection rencontre la surface à rugosité accrue, dans lequel cette température est supérieure d'au moins 5 % à la température à laquelle le matériau de projection rencontre la surface à rugosité accrue.

6. Procédé selon l'une quelconque des revendications précédentes, **caractérisé en ce que** la projection au plasma atmosphérique, la projection arc-fil, la projection par flamme supersonique ou la projection à la flamme est utilisée comme procédé de projection thermique et que le matériau de projection, qui est appliqué avec le procédé de projection thermique, est amené au processus sous forme de poudre, de fil, de cordon, de barre, de solution ou de suspension, en fonction du procédé.

7. Procédé selon l'une quelconque des revendications précédentes, **caractérisé en ce qu'**une couche d'un tissu d'arrachage, d'une grille ou d'une gaze est utilisée avec des découpes, de sorte que des zones définies localement sont réalisées avec et sans surface rugueuse et seules les zones à rugosité de surface accrue sont pourvues d'un revêtement (2) par projection thermique.

8. Procédé selon l'une quelconque des revendications précédentes, **caractérisé en ce que**, pendant la projection thermique, un refroidissement est effectué sur la pièce en plastique renforcé par des fibres et à cet effet un nombre accru de buses de refroidissement (5) sur un dispositif de projection (4), un refroidissement avec du CO₂ au lieu d'air comprimé, une augmentation de la distance de projection par rapport à la surface à revêtir de jusqu'à 50 mm par rapport à la distance standard, qui est habituellement maintenue lors de la projection atmosphérique, une réduction de la part d'hydrogène dans le gaz plasma jusqu'à 30 % par rapport à la part d'hydrogène standard habituelle et/ou une réduction de l'intensité du courant électrique jusqu'à 75 % par rapport à l'intensité du courant électrique habituellement utilisée pour le matériau de projection respectif est effectué(e).
